(19) Europäisches Patentamt
European Patent Office
Office européen des brevets

(11) Veröffentlichungsnummer: **0 230 545 B1**

(12) # EUROPÄISCHE PATENTSCHRIFT

(45) Veröffentlichungstag der Patentschrift: **11.11.92**

(51) Int. Cl.$^5$: **C08G 69/44**, C08G 69/32

(21) Anmeldenummer: **86116266.7**

(22) Anmeldetag: **24.11.86**

(54) **Vollaromatische Polyesteramide, deren Herstellung und Verwendung.**

(30) Priorität: **04.12.85 DE 3542779**

(43) Veröffentlichungstag der Anmeldung:
**05.08.87 Patentblatt 87/32**

(45) Bekanntmachung des Hinweises auf die Patenterteilung:
**11.11.92 Patentblatt 92/46**

(84) Benannte Vertragsstaaten:
**BE CH DE FR GB IT LI LU NL SE**

(56) Entgegenhaltungen:
**EP-A- 0 063 881**
**EP-A- 0 131 846**
**US-A- 4 375 530**

(73) Patentinhaber: **BASF Aktiengesellschaft**
**Carl-Bosch-Strasse 38**
**W-6700 Ludwigshafen(DE)**

(72) Erfinder: **Kock, Hans-Jacob, Dr.**
**Benckiserstrasse 63**
**W-6700 Ludwigshafen(DE)**
Erfinder: **Hisgen, Bernd, Dr.**
**Goethestrasse 6**
**W-6703 Limburgerhof(DE)**

**EP 0 230 545 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind vollaromatische Polyesteramide, die unterhalb von 320°C eine flüssig-kristalline fadenbildende Schmelze bilden.

Es sind schon eine Reihe von flüssig-kristallinen Polyesteramiden bekannt. Solche Polymere sind jedoch hinsichtlich ihrer Wärmeformbeständigkeit, ihrer Verarbeitbarkeit und insbesondere ihre geringe Abriebfestigkeit verbesserungsbedürftig. In der US-PS 4 330 457 werden Polyesteramide, aufgebaut aus Hydroxynaphthalincarbonsäure, Terephthalsäure, Hydrochinon und p-Aminophenol beschrieben. Solche Polyesteramide haben jedoch eine Glasübergangstemperatur von etwa 110°C und demzufolge eine geringe Wärmeformbeständigkeit. Das gleiche gilt für die aus der US-PS 4 351 917 bekannten Polyesteramide, die aus p-Aminophenol, p-Hydroxybenzoesäure und Hydroxynaphthalincarbonsäure aufgebaut sind. Schließlich sind aus der EP-Anmeldung 81 900 Polyesteramide bekannt, die zu mindestens 40 % aus koaxialen Einheiten, wie aromatischen Dicarbonsäuren, hydroxyaromatischen Carbonsäuren, Bisphenolen und Aminophenolen bestehen und eine ausreichende Menge an nichtlinearen Resten enthalten, die sie von aromatischen m-Aminoverbindungen oder zweikernigen aromatischen Sulfonen ableiten. Es wird jedoch kein Hinweis gegeben, welche Zusammensetzung erforderlich ist, um die gewünschte Eigenschaftskombination zu erzielen.

Es war deshalb die technische Aufgabe gestellt, vollaromatische Polyesteramide zur Verfügung zu stellen, die unterhalb 320°C eine flüssig-kristalline fadenbildende Schmelze bilden und sich somit leicht verarbeiten lassen und darüber hinaus eine hohe Wärmeformbeständigkeit, eine gute Abriebfestigkeit sowie eine hohe Zähigkeit aufweisen.

Diese Aufgabe wird gelöst durch vollaromatische Polyesteramide die unterhalb 320°C eine flüssig-kristalline fadenbildende Schmelze bilden, aufgebaut aus

a) 5 bis 35 Mol.% wiederkehrenden Einheiten der Formel I

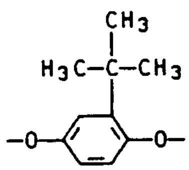

wobei ein Teil der Einheiten der Formel I ersetzt sein kann durch wiederkehrende Einheiten der Formel II

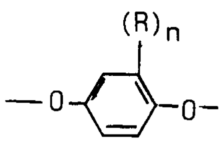

II ,

in der R ein Halogenatom, einen Alkylrest mit bis zu 4 Kohlenstoffatomen, ausgenommen t-Butyl sowie einen Phenylrest bezeichnet und n für 1, 2 oder 3 steht,

b) 5 bis 15 Mol.% wiederkehrenden Einheiten der Formel III

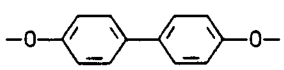

III,

wobei ein Teil der Einheiten der Formel III ersetzt sein kann durch wiederkehrende Einheiten der Formel IV und/oder V

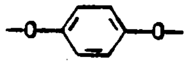

IV

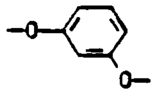

V

c) einer der Summe der Komponenten a) und b) und gegebenenfalls e), sofern e) wiederkehrende Einheiten der Formeln IX und X bezeichnet, entsprechenden molaren Menge an wiederkehrenden Einheiten der Formel VI

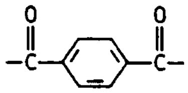

VI

d) mindestens 10 Mol.% wiederkehrenden Einheiten der Formel VII

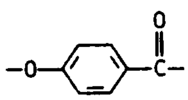

VII

e) 2 bis 15 Mol.% wiederkehrenden Einheiten der Formel VIII

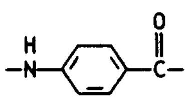

VIII

oder der Formel IX

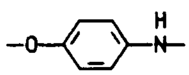

IX

wobei die wiederkehrenden Einheiten der Formel IX zum Teil ersetzt sein können durch wiederkehrende Einheiten der Formel X

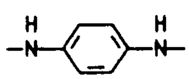

X

mit der Maßgabe, daß die Summe der molaren Anteile der Komponenten a), b), c), d) und e) jeweils 100 Mol.% ergibt.

Die neuen Polyesteramide haben den Vorteil, daß sie eine glatte abriebfeste Oberfläche aufweisen und eine gute Wärmeformbeständigkeit haben. Zudem zeichnen sich die neuen Polyesteramide durch gute mechanische Werte, insbesondere eine hohe Zähigkeit aus. Darüber hinaus sind die neuen Polyesteramide weitgehend chemikalienbeständig und schwer brennbar. Schließlich haben die neuen Polyesteramide den Vorteil, daß sie bei einer Temperatur unterhalb 320 °C eine flüssig-kristalline fadenbildende Schmelze zeigen und leicht verarbeitbar sind.

Der flüssig-kristalline Zustand der Polyesteramide kann mit dem Polarisationsmikroskop nach einer in der DE-AS 25 20 819 beschriebenen Methode nachgewiesen werden. Zwischen gekreuzten Polarisatoren weisen die Polymerschmelzen, die in einer Schichtdicke von 10 µm zwischen Glasplatten aufgetragen sind, Texturen auf, die einer mesomorphen Phase zugeordnet werden können.

Die erfindungsgemäßen Polyesteramide sind aufgebaut aus

a) 5 bis 35 Mol.% wiederkehrenden Einheiten der Formel I. Eine geeignete Ausgangsverbindung ist beispielsweise tert.-Butylhydrochinon.

Es ist auch möglich, daß ein Teil der Komponente a) ersetzt ist durch wiederkehrende Einheiten der Formel II

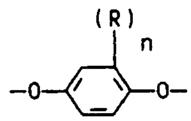

II,

in der R ein Halogenatom oder einen $C_1$-$C_4$-Alkylrest, ausgenommen t-Butyl, oder einen Phenylrest bezeichnet und n für 1, 2 oder 3 steht. Vorteilhaft sind Einheiten der Formel II in einer Menge von 5 bis 15 Mol.% enthalten. Geeignete Ausgangsverbindungen für Einheiten der Formel II sind beispielsweise Chlorhydrochinon, Methylhydrochinon, Trimethylhydrochinon, Phenylhydrochinon.

b) 5 bis 15 Mol.% wiederkehrenden Einheiten der Formel III. Eine vorteilhafte Ausgangsverbindung ist beispielsweise 4,4'-Dihydroxybiphenyl.

In geeigneten vollaromatischen mesomorphen Polyesteramiden ist ein Teil der Komponente b) ersetzt durch Einheiten der Formel IV oder V

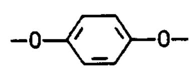

IV

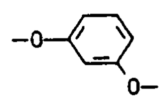

V

Eine vorteilhafte Ausgangsverbindung für Einheiten der Formel IV ist Hydrochinon und für solche der Formel V Resorcin. Vorzugsweise beträgt der Gehalt an Einheiten der Formel IV und/oder V 3 bis 12 Mol.%.

c) Einer Summe der Komponenten a) und b) und gegebenenfalls e), sofern e) wiederkehrende Einheiten der Formel IX und X bezeichnet, entsprechenden molaren Menge an wiederkehrenden Einheiten der Formel VI. Eine geeignete Ausgangsverbindung ist beispielsweise Terephthalsäure.

d) Mindestens 10 Mol.%, insbesondere mindestens 20 Mol.% wiederkehrenden Einheiten der Formel VII. Eine vorteilhafte Ausgangsverbindung ist p-Hydroxybenzoesäure.

e) 2 bis 15 Mol.% wiederkehrenden Einheiten der Formel VIII oder IX. Eine vorteilhafte Ausgangsverbindung für Einheiten der Formel VIII ist p-Aminobenzoesäure und für Einheiten der Formel IX 4-Aminophenol. Es ist auch möglich, daß ein Teil der Einheiten der Formel IX ersetzt ist durch solche der Formel X, wobei die Menge vorteilhaft 2 bis 5 Mol.% beträgt. Eine geeignete Ausgangsverbindung für Einheiten der Formel X ist beispielsweise p-Phenylendiamin.

Es versteht sich, daß die Summe der molaren Anteile der Komponenten a), b), c), d) und e) jeweils 100 Mol.% ergibt.

Bevorzugte vollaromatische Polyesteramide haben eine Glasübergangstemperatur Tg von ≧ 150 °C, insbesondere von ≧ 170 °C. Die Glastemperatur soll dabei gemessen werden mit der DSC-Methode, wie sie beschrieben ist von K.H. Illers in Makromol. Chemie, Band 127 (1969), Seiten 1ff. Die vollaromatischen flüssigkristallinen Polyesteramide bilden bei einer Temperatur < 320 °C, insbesondere < 300 °C, eine flüssigkristalline fadenbildende Schmelze. Bevorzugt sind auch flüssig-kristalline aromatische Polyesteramide, die bei einer Temperatur > 200 °C und < 300 °C Teilkristallinität aufweisen.

Die erfindungsgemäßen flüssig-kristallinen Polyesteramide sind erhältlich durch eine Reihe von analogen Techniken, wie sie beispielsweise in der US-PS 4 375 530 und US-PS 4 118 372 beschrieben sind.

Nach einer vorteilhaften Arbeitsweise erhält man die erfindungsgemäßen Polyesteramide in einem Einstufenverfahren, bei dem man die nicht-derivatisierten Ausgangsstoffe unter Verwendung von Anhydriden niederer Fettsäuren, z.B. Fettsäuren mit 2 bis 4 Kohlenstoffatomen, insbesondere Essigsäureanhydrid, gegebenenfalls unter Mitverwendung von Katalysatoren, umsetzt. Geeignete Katalysatoren sind beispielsweise in der EP-A 131 846, Seite 9, beschrieben. Diese werden vorteilhaft in einer Menge von 0,001 bis 1

Gew.%, bezogen auf die Ausgangsstoffe, eingesetzt. Bei der Umsetzung werden die Ausgangsstoffe zusammen mit Fettsäureanhydrid, vorteilhaft in einem mindestens 5 %igen molaren Überschuß, bezogen auf die vorhandenen Amino- und Hydroxygruppen, unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden, vorzugsweise bis zu 2 Stunden auf 130 bis 200 °C, anschließend wird die Temperatur z.B. innerhalb von 2 bis 2 1/2 Stunden auf 250 bis 350 °C gesteigert. Hierbei werden überschüssige Fettsäureanhydride und Fettsäuren abdestilliert. Um die Reaktion zu vervollständigen, hat es sich als vorteilhaft erwiesen, gegen Ende verminderten Druck z.B. 200 bis 0,1 mbar, anzuwenden.

Bemerkenswert und nicht vorherzusehen bei der Anwendung dieses Einstufenverfahrens ist zunächst die problemlose und vollständige Reaktion ohne Katalysatorzusatz zu den gewünschten Polymeren in einer relativ kurzen Zeit. Dies ist umso erstaunlicher als durch die Vielzahl chemisch unterschiedlicher Amino- und Hydroxygruppen eine Abstufung der Reaktivitäten und damit ein mangelhafter Polymeraufbau zu erwarten wäre.

Die so erhaltenen vollaromatischen flüssig-kristallinen Polyesteramide werden vorteilhaft in festem Zustand z.B. bei einer Temperatur von 150 bis 250 °C bis zu der gewünschten Viskosität weiterkondensiert. Diese Nachkondensation in fester Phase kann sowohl vor als auch nach einer thermoplastischen Verarbeitung erfolgen. Vorteilhaft führt man die Kondensation in fester Phase unter Mitverwendung von Inertgasen wie Stickstoff durch.

Die Polyesteramide gemäß der Erfindung können durch übliche Zusatzstoffe wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- oder pulverförmige Füll-und Verstärkungsmittel, Keimbildungsmittel oder Weichmacher modifiziert werden. Solche Mittel werden in üblichen wirksamen Mengen angewandt.

Die Stabilisatoren können den Polyesteramiden in jedem Stadium der Herstellung oder den fertigen Polymeren zugesetzt werden. Vorzugsweise werden die Stabilisatoren zu einem frühen Zeitpunkt zugesetzt, um zu verhindern, daß die Zersetzung bereits beginnt, bevor die Polymeren geschützt werden können.

Zu den Oxidationsverzögerern und Wärmestabilisatoren die den Polyesteramiden gemäß der Erfindung zugesetzt werden können, gehören diejenigen die allgemein für Polymere angewandt werden, wie Halogenide von Metallen der Gruppe I des Periodischen Systems, z.B. Natrium-, Kalium- oder Lithiumhalogenide mit Kupfer-I-halogeniden, z.B. Chloriden, Bromiden oder Iodiden. Weitere geeignete Stabilisatoren sind sterisch gehinderte Phenole, Hydrochinone sowie verschiedene substituierte Vertreter dieser Gruppen und Kombinationen derselben. Solche Stabilisatoren werden im allgemeinen in Konzentrationen bis zu 1 Gew.%, bezogen auf das Gewicht der Mischung, angewandt.

Als UV-Stabilisatoren sind ebenfalls diejenigen geeignet, die man allgemein zu Polymeren zusetzt, z.B. in Mengen bis zu 2 Gew.%, bezogen auf die polymere Masse. Beispiele für UV-Stabilisatoren sind verschiedene substituierte Resorcine, Salicylate, Benztriazole, Benzophenone und dergleichen.

Weitere geeignete Hilfsstoffe sind organische Farbstoffe wie Nigrosin, ferner Pigmente wie Titandioxid, Cadmiumsulfid, Cadmiumsulfid-Selenid, Phthalocyanine, Ultramarinblau oder Ruß. Als geeignete faser- und pulverförmige Füllstoffe und Verstärkungsmittel seien genannt Kohlenstofffasern, Glasfasern, amorphe Kieselsäure, Asbest, Calciumsilikat, Aluminiumsilikat, Magnesiumcarbonat, Kaolin, Kreide, gepulverter Quarz, Glimmer oder Feldspat. Solche Verstärkungsmittel werden vorteilhaft in Mengen bis zu 70 Gew.% des Polymeren angewandt.

Ferner sind geeignete Hilfsmittel Keimbildungsmittel, wie Talkum, Calciumfluorid, Natriumphenylphosphinat, Aluminiumoxid und feinteiliges Polytetrafluorethylen.

Als geeignete Weichmacher, die in Mengen z.B. bis zu 20 Gew.% des Polymeren angewandt werden können, seien genannt Phthalsäuredioctylester, Phthalsäuredibenzylester, Phthalsäurebutylbenzylester, Kohlenwasserstofföle, N-n-Butylbenzolsulfonamid, o- und p-Toluolethylsulfonamid. Färbemittel wie Farbstoffe oder Pigmente können in Mengen bis zu 5 Gew.% angewandt werden.

Die erfindungsgemäßen vollaromatischen flüssig-kristallinen Polyesteramide eignen sich zur Herstellung von Fäden, Fasern, Folien, Schäumen und technischen Formteilen durch Spritzguß, Pressen oder Extrusion. Die aus den erfindungsgemäßen Polyesteramiden hergestellten Formteile zeichnen sich durch hervorragende mechanische Eigenschaften wie Steifigkeit, Festigkeit und Zähigkeit aus. Sie sind außerordentlich chemikalienresistent und flammwidrig. Zudem besitzen sie eine hohe Wärmeformbeständigkeit und eine glatte abriebfeste Oberfläche. Die erfindungsgemäßen Polyesteramide eignen sich daher hervorragend zur Herstellung von Formteilen für die Elektro- und Datentechnik, im Fahrzeugbau und anderen technischen Bereichen. Sie können aber auch als Überzugs- und Beschichtungsmittel pulverförmig dispergiert oder als Film eingesetzt werden.

Die Erfindung sei an folgenden Beispielen veranschaulicht.

Beispiel 1

0,2 mol Terephthalsäure, 0,26 mol 4-Hydroxybenzoesäure, 0,06 mol 4-Aminobenzoesäure, 0,16 mol tert.-Butylhydrochinon, 0,04 mol 4,4' -Dihydroxydiphenyl sowie 0,86 mol Acetanhydrid werden in einem Kolben mit Rührer, Stickstoffeinleitung und einem Destillationsaufsatz eingewogen. Unter $N_2$-Atmosphäre wird in einem Metallbad auf 100 ° C erhitzt. Die Temperatur wird dann in 30' auf 150 ° C, in weiteren 100' auf 200 ° C und anschließend in 120' auf die Endtemperatur von 340 ° C erhöht. Anschließend wird der Druck auf 560 mbar und dann alle 10' auf die Hälfte verringert. Das Endvakuum beträgt 50 mbar. Man erhält so eine sehr zähe fadenbildende Schmelze. Aus DSC-Messungen ergibt sich eine Glastemperatur von 182 ° C. Die inhärente Viskosität beträgt 2,2 dl/g, gemessen in 0,1 gew.%iger Lösung in Pentafluorphenol bei 60 ° C.

Beispiel 2

0,2 mol Terephthalsäure, 0,23 mol 4-Hydroxybenzoesäure, 0,03 mol 4-Aminobenzoesäure, 0,16 mol tert.-Butylhydrochinon, 0,04 mol 4,4'-Dihydroxybiphenyl sowie 0,86 mol Acetanhydrid werden wie in Beispiel 1 polykondensiert. Das Endvakuum beträgt 100 mbar. Der flüssigkristalline Polyesteramid hat eine Glastemperatur von 185 ° C und eine inhärente Viskosität von 1,75 dl/g.

Beispiel 3

0,2 mol Terephthalsäure, 0,26 mol 4-Hydroxybenzoesäure, 0,02 mol 4-Aminophenol, 0,04 mol 4,4' -Dihydroxydiphenyl, 0,14 mol tert.-Butylhydrochinon sowie 0,86 mol Acetanhydrid werden wie in Beispiel 1 umgesetzt. Die Temperatur wird in 30' auf 150 ° C, in weiteren 100' auf 200 ° C und in 120' auf 340 ° C erhöht. Das Endvakuum beträgt 90 mbar. Der flüssigkristalline Polyesteramid hat eine Glastemperatur von 175 ° C und eine inhärente Viskosität von 1,0 dl/g.

**Patentansprüche**

**1.** Vollaromatische Polyesteramide, die unterhalb von 320 ° C eine flüssig-kristalline fadenbildende Schmelze bilden, aufgebaut aus

a) 5 bis 35 Mol.% wiederkehrenden Einheiten der Formel I

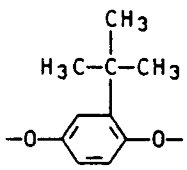

I ,

wobei ein Teil der Einheiten der Formel I ersetzt sein kann durch wiederkehrende Einheiten der formel II

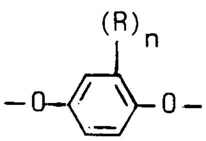

II,

in der R ein Halogenatom, einen Alkylrest mit bis zu 4 Kohlenstoffatomen, ausgenommen t-Butyl sowie einen Phenylrest bezeichnet und n für 1, 2 oder 3 steht,

b) 5 bis 15 Mol.% wiederkehrenden Einheiten der Formel III

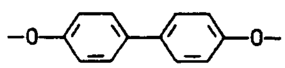

III

wobei ein Teil der Einheiten der Formel III ersetzt sein kann durch wiederkehrende Einheiten der Formel IV und/oder V

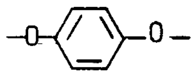

IV

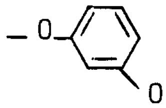

V

c) einer Summe der Komponenten a) und b) und gegebenenfalls e), sofern e) wiederkehrende Einheiten der Formel IX oder X bezeichnet, entsprechenden molaren Menge wiederkehrenden Einheiten der Formel VI

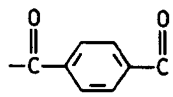

VI

d) mindestens 10 Mol.% wiederkehrenden Einheiten der Formel VII

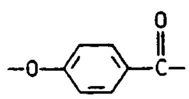

VII

e) 2 bis 15 Mol.% wiederkehrenden Einheiten der Formel VIII

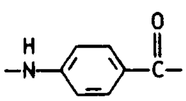

VIII

oder wiederkehrenden Einheiten der Formel IX

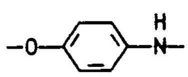

IX

wobei ein Teil der Einheiten der Formel IX ersetzt sein kann durch wiederkehrende Einheiten der Formel X

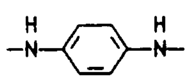

X

mit der Maßgabe, daß die Summe der molaren Anteile der Komponenten a), b), c), d) und e) jeweils 100 Mol.% ergibt.

**2.** Vollaromatische Polyesteramide nach Anspruch 1, dadurch gekennzeichnet, daß sie als Komponente b) 3 bis 12 Mol.% wiederkehrende Einheiten der Formeln IV oder V enthalten.

**3.** Vollaromatische Polyesteramide nach den Ansprüchen 1 bis 2, dadurch gekennzeichnet, daß sie als Komponente a) 5 bis 15 Mol.% wiederkehrende Einheiten der Formel II enthalten.

**4.** Vollaromatische Polyesteramide nach den Ansprüchen 1 bis 3, dadurch gekennzeichnet, daß sie eine Glasübergangstemperatur ≧ 150 ° C haben.

**5.** Verfahren nach den Ansprüchen 1 bis 4, dadurch gekennzeichnet, daß man die Monomeren in Form der underivatisierten Hydroxy-, Amino- bzw. Carboxyverbindungen in einem Einstufenverfahren und in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

**6.** Verfahren nach Anspruch 5, dadurch gekennzeichnet, daß man die vollaromatischen Polyesteramide nach der Kondensation in der Schmelze durch Kondensation in fester Phase bei einer Temperatur von 150 bis 250 ° C nachkondensiert.

**7.** Verwendung von vollaromatischen Polyesteramiden nach den Ansprüchen 1 bis 4 zur Herstellung von Fäden, Fasern, Folien und Formteilen.

**Claims**

**1.** A wholly aromatic polyester amide which forms a liquid-crystalline fiber-forming melt below 320 ° C and is composed of

a) from 5 to 35 mol % of repeat units of the formula I

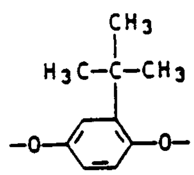

I

the repeat units of the formula I being replaceable in part by repeat units of the formula II

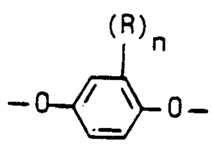

II

where R is halogen, alkyl of not more than 4 carbon atoms, with the exception of t-butyl, or phenyl, and n is 1, 2 or 3,

b) from 5 to 15 mol % of repeat units of the formula III

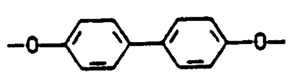

III

the repeat units of the formula III being replaceable in part by repeat units of the formula IV and/or V

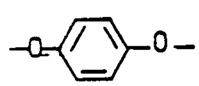

IV

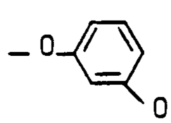

V

c) a molar amount corresponding to the total amount of components a) and b), and, when e) signifies

repeat units of the formula IX or X, e) of repeat units of the formula VI

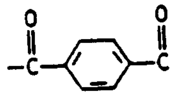

VI

d) not less than 10 mol % of repeat units of the formula VII

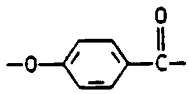

VII

e) from 2 to 15 mol % of repeat units of the formula VIII

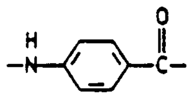

VIII

or of the formula IX

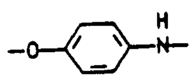

IX

the repeat units of the formula IX being replaceable in part by repeat units of the formula X

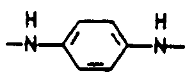

X

with the proviso that the molar proportions of components a), b), c), d) and e) add up to 100 mol % in each case.

**2.** A wholly aromatic polyester amide as claimed in claim 1, which contains from 3 to 12 mol % of repeat units of the formula IV or V as component b).

**3.** A wholly aromatic polyester amide as claimed in claim 1 or 2, which contains from 5 to 15 mol % of repeat units of the formula II as component a).

**4.** A wholly aromatic polyester amide as claimed in any of claims 1 to 3, which has a glass transition temperature ≧ 150 ° C.

**5.** A process as claimed in any of claims 1 to 4, which comprises reacting the monomers in the form of the underivatized hydroxy, amino and carboxy compounds in a single-stage process and in the molar ratios described in the presence of excess fatty acid anhydride at elevated temperatures and distilling fatty acid anhydride and fatty acid out of the reaction mixture.

**6.** A process as claimed in claim 5, wherein the wholly aromatic polyester amide, after the condensation in the melt, is postcondensed in the solid phase at 150-250 ° C.

**7.** Use of a wholly aromatic polyester amide as claimed in any of claims 1 to 4 for the production of filaments, fibers, films and moldings.

**Revendications**

**1.** Polyesteramides entièrement aromatiques qui forment, au-dessous de 320 ° C, une masse fondue cristalline liquide formant des fils, composés de

a) 5 à 35% en moles de motifs répétitifs de formule I

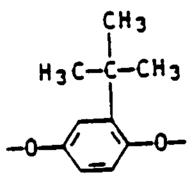

I ,

une partie des motifs de formule I pouvant être remplacée par des motifs répétitifs de formule II

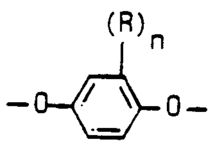

II,

dans laquelle R désigne un atome d'halogène, un reste alkyle renfermant jusqu'à 4 atomes de carbone, à l'exclusion du reste t-butyle, ou un reste phényle et n est mis pour 1, 2 ou 3,

b) 5 à 15% en moles de motifs répétitifs de formule III

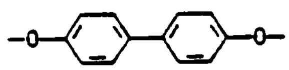

III

une partie des motifs de formule III pouvant être remplacée par des motifs répétitifs de formule IV et/ou V

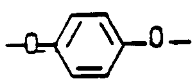

IV

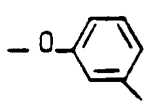

V

c) une quantité molaire de motifs répétitifs de formule VI

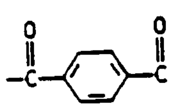

VI

correspondant à la somme des composants a), b) et éventuellement e), dans la mesure où e) représente des motifs répétitifs de formule IX ou X,

d) au moins 10% en moles de motifs répétitifs de formule VII

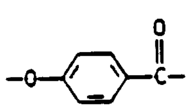

VII

e) 2 à 15% en moles de motifs répétitifs de formule VIII

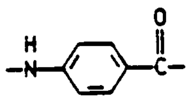

VIII

ou de motifs répétitifs de formule IX

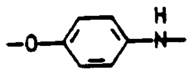

IX

une partie des motifs de formule IX pouvant être remplacée par des motifs répétitifs de formule X

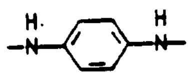

X

étant spécifié que la somme des parts molaires des composants a), b), c), d) et e) est égale chaque fois à 100% en moles.

**2.** Polyesteramides entièrement aromatiques selon la revendication 1, caractérisés en ce qu'ils contiennent, en tant que composant b), de 3 à 12% en moles de motifs répétitifs de formule IV ou V.

**3.** Polyesteramides entièrement aromatiques selon la revendication 1 ou 2, caractérisés en ce qu'ils contiennent, en tant que composant a), de 5 à 15% en moles de motifs répétitifs de formule II.

**4.** Polyesteramides entièrement aromatiques selon l'une quelconque des revendications 1 à 3, caractérisés en ce qu'ils ont une température de transition vitreuse supérieure ou égale à 150 ° C.

**5.** Procédé de préparation de polyesteramides selon l'une quelconque des revendications 1 à 4, caractérisé en ce qu'on fait réagir à température élevée les monomères sous forme des composés hydroxylés, aminés ou carboxylés non transformés en dérivés, en une opération en une seule étape et dans les rapports molaires indiqués, avec addition d'anhydride d'acide gras en excès, et on élimine du mélange réactionnel par distillation l'anhydride d'acide gras et l'acide gras.

**6.** Procédé selon la revendication 5, caractérisé en ce qu'après la condensation dans la masse fondue, on soumet les polyesteramides entièrement aromatiques à une post-condensation par condensation en phase solide à une température de 150 à 250 ° C.

**7.** Utilisation de polyesteramides entièrement aromatiques selon l'une quelconque des revendications 1 à 4 pour la fabrication de fils, de fibres, de feuilles et de pièces moulées.